# EUROPEAN PATENT APPLICATION

(11) **EP 3 439 436 A1**
(43) Date of publication of application: **06.02.2019**
(21) Application number: 16897071.3
(22) Date of filing: 12.12.2016
(51) Int. Cl.: H05B 37/02, F24F 11/02, H02J 13/00

(54) **CONTROL CONTENT MANAGEMENT SYSTEM, POWER CONTROL SYSTEM, CONTROL CONTENT MANAGEMENT METHOD, AND PROGRAM**

(30) Priority: 30.03.2016 JP 2016067567
(71) Applicant: Ricoh Company, Ltd., Tokyo 143-8555 (JP)
(72) Inventor: MIYAMATSU, Hirokuni, Tokyo 143-8555 (JP)
(74) Representative: SSM Sandmair
(86) International application number: PCT/JP2016/086844
(87) International publication number: WO 2017/168855

(57) **Abstract**

Conventionally, energy saving has been realized by: detection of presence or absence of a person by use of a temperature distribution sensor with a thermopile; and lighting equipment being turned off in an area where a person is not present. However, since the lighting equipment is controlled according to the presence or absence of a user without exception, individual demands of users have been unable to be dealt with. A control content management system achieves an effect of enabling lighting control matching the actual conditions more, because not only determination of a control content according to presence or absence of a heat source is performed, but also generation of control data reflecting past adjustment degrees from users and indicating the final control content and transmission of the control data to a controlled system or the like are performed.

## Description

### Field

The present invention relates to an invention for management of contents of control for a controlled system in a predetermined space.

### Background

When an area of a space, such as an office, is partitioned, both an area with a person (a user) and an area without a person (a user) are normally present. In an area with a user, lighting equipment needs to be turned on such that work of the user is not undermined, and in an area without a user, lighting equipment does not need to be turned on. Illumination equipment is preferably turned off for elimination of waste of power. Conventionally, energy saving has been realized by: detection of presence or absence of a user by use of a temperature distribution sensor with a thermopile; and lighting equipment being turned off in an area where a user is not present (see Patent Literature 1).

### Summary

### Technical Problem

However, since the apparatus described in Patent Literature 1 controls the lighting equipment according to presence or absence of a user without exception, the apparatus has been unable to control lighting in a way matching the actual conditions.

### Solution to Problem

An invention according to claim 1 is a control content management system that is able to communicate with a detection device, which detects temperature of a predetermined space, and with a mobile terminal, and that manages a control content of a controlled system in the predetermined space; the control content management system including: a control content management means for management of predetermined heat source presence or absence information indicating presence or absence of a heat source in the predetermined space, in association with a predetermined control content for the controlled system in the predetermined space; an adjustment target management means for management of predetermined adjustment target identification information for identification of one or plural controlled systems, for which control contents are adjusted altogether, in association with control target identification information for identification of each controlled system indicated by the predetermined adjustment target identification information; a receiving means that receives, from the detection device, specific control target identification information for identification of a specific controlled system that is able to communicate with the detection device, and specific heat source presence or absence information indicating presence or absence of a heat source in a specific space where the specific controlled system is present; and a transmitting means that transmits, to the specific controlled system, control data indicating a specific control content corresponding to the received specific heat source presence or absence information in the control content management means; the receiving means receiving, from the mobile terminal, the specific adjustment target identification information, and an adjustment degree for adjustment of a control content for the controlled system indicated by the specific adjustment target identification information; the transmitting means transmitting, to the specific controlled system indicated by the specific control target identification information corresponding to the received specific adjustment target identification information in the adjustment target management means, adjustment data indicating the adjustment degree.

### Advantageous Effects of Invention

As described above, according to the present invention, not only determination of a control content for a controlled device according to presence or absence of a heat source is enabled, but also adjustment of the control content for the controlled device based on a past control content adjustment degree from a mobile terminal is enabled. Thereby, an effect of enabling lighting control matching the actual conditions more is able to be achieved.

### Brief Description of Drawings

FIG. 1 is a schematic diagram of the whole of a power control system according to an embodiment of the present invention.
FIG. 2 is an external appearance configuration diagram in a case where a controlled system is fluorescent lamp type LED lighting equipment.
FIG. 3 is a hardware configuration diagram of a detection device.
FIG. 4 is a hardware configuration diagram of a mobile terminal.
FIG. 5 is a hardware configuration diagram of a control content management system.
FIG. 6 is a functional configuration diagram of the power control system.
FIG. 7(A) is a conceptual diagram of layout information of controlled systems, and FIG. 7(B) is a conceptual diagram of layout information of a room α.
FIG. 8 is a conceptual diagram of a control content management table.
FIG. 9 is a conceptual diagram of an adjustment degree management table.
FIG. 10 is a conceptual diagram of a consumption management table.
FIG. 11 is a conceptual diagram of a user management table.
FIG. 12 is a conceptual diagram of an adjustment target management table.
FIG. 13 is a conceptual diagram of an adjustment range management table.
FIG. 14 is a diagram illustrating an example of an adjustment range registration screen.
FIG. 15 is a sequence diagram illustrating processing of the power control system.
FIG. 16(A) is a conceptual diagram illustrating a temperature distribution, and FIG. 16(B) is a conceptual diagram of heat source data indicating presence and absence of heat sources.
FIG. 17 is a conceptual diagram of heat source data indicating presence and absence of all of heat sources in one room.
FIG. 18 is a sequence diagram illustrating control content adjustment processing.
FIG. 19 is a screen transition diagram for a mobile terminal upon lighting adjustment.
FIG. 20 is a screen transition diagram for a mobile terminal upon air conditioning adjustment.
FIG. 21 is a sequence diagram illustrating processing for display of power consumption.
FIG. 22 is a screen transition diagram for a mobile terminal upon display of power consumption.

### Description of Embodiments

Hereinafter, by use of the drawings, an embodiment of the present invention will be described.

### Outline of Power Control System

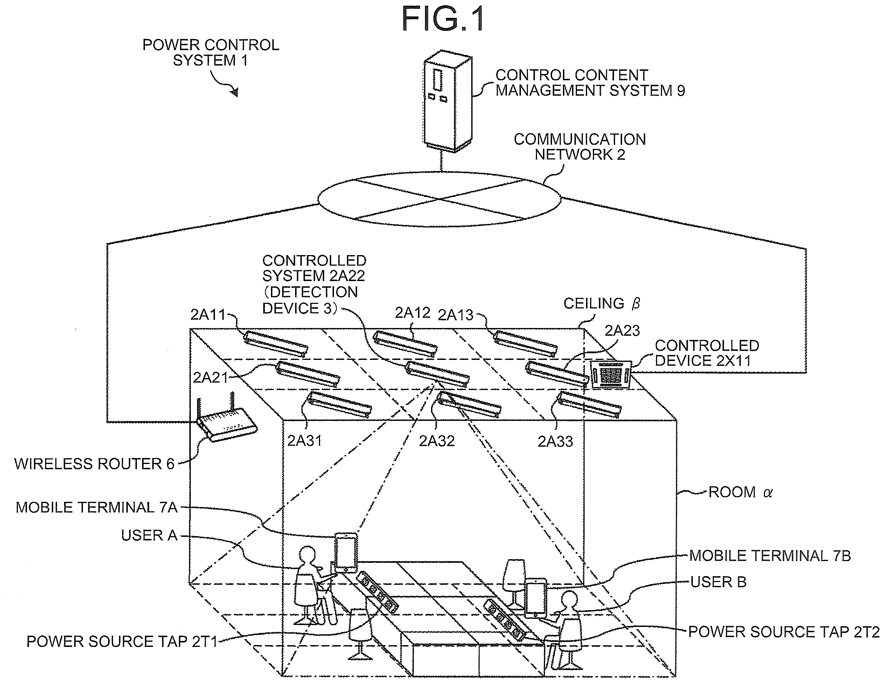

FIG. 1 is a schematic diagram of the whole of a power control system according to an embodiment of the present invention. As illustrated in FIG. 1, a power control system 1 according to this embodiment is constructed of: plural controlled systems (2A11, 2A12, 2A13, 2A21, 2A22, 2A23, 2A31, 2A32, and 2A33) installed at a ceiling β side of a room α that is an example of a predetermined space; a controlled system 2X11; a wireless router 6; and a control content management system 9.

Further, the controlled systems (2A11, 2A12, 2A13, 2A21, 2A22, 2A23, 2A31, 2A32, and 2A33) are respectively installed, as illustrated in FIG. 1, in nine areas resulting from division of the ceiling β. The controlled system 2A22 in the middle has a detection device 3 provided therein. Hereinafter, an arbitrary one of the controlled systems (2A11, 2A12, 2A13, 2A21, 2A22, 2A23, 2A31, 2A32, and 2A33) will be referred to as a "controlled system 2A". Further, an arbitrary one of the controlled system 2X11 and controlled systems (2X12, 2X21, and 2X22) that will be described later will be referred to as a "controlled system 2X". One area corresponds to, for example, a square range of 70 cm × 70 cm.

The controlled system 2A is fluorescent lamp type light emitting diode (LED) lighting equipment. In particular, the detection device 3 of the controlled system 2A22 detects, through functions of a thermopile, a temperature distribution in plural areas (herein, nine areas) resulting from division of the room α, and wirelessly transmits heat source data indicating presence and absence of heat sources. The controlled system 2X11 is an air conditioner.

The wireless router 6 receives the heat source data transmitted from the detection device 3, and transmits the heat source data to the control content management system 9 via a communication network 7. The communication network 7 is constructed of a local area network (LAN), and a part of the communication network 7 may include the Internet.

Based on the heat source data and the like transmitted from the wireless router 6, the control content management system 9 generates control data indicating control contents for control of the controlled systems 2A and 2X, and transmits the control data to the controlled systems 2A and 2X11. Based on the control data, the controlled system 2A executes LED lighting control. Based on the control data, the controlled system 2X11 executes control of temperature, humidity, air flow power, and air flow direction. That is, the controlled system 2A22 not only detects the temperature distribution in the room α, but also executes LED lighting control within the controlled system 2A22.

Further, in the room α, there are a mobile terminal 7A and a power source tap 2T1 that are used personally by a user A, and a mobile terminal 7B and a power source tap 2T2 that are used personally by a user B. These mobile terminals are, for example, smartphones. Hereinafter, an arbitrary one of the mobile terminals 7A and 7B will be referred to as a "mobile terminal 7". Further, an arbitrary one of the power source taps 2T1 and 2T2 will be referred to as a "power source tap 2T". For example, by using the mobile terminal 7A, the user A requests the control content management system 9 to adjust the control content for a controlled system. Thereby, the control content management system 9 adjusts the degree of lighting control for each controlled system 2A, temperature of each controlled system 2X, and the like, by transmitting the control data with the adjusted control contents to the controlled systems 2A and 2X.

Further, the control content management system 9 is able to manage power consumption of the controlled systems 2A and 2X and the power source taps 2T. The control content management system 9 is able to obtain power consumptions of the predetermined controlled systems 2A and 2X and power source taps 2T, from an electricity meter. The control content management system 9 may directly obtain the power consumption, from the electricity meter to the predetermined controlled systems 2A and 2X and power source taps 2T. In this case, the power source taps 2T are each a power source tap with a wattmeter, and each transmit a personal use target identification (ID) for identification of itself and a power consumption, to the control content management system 9, via the local area network (LAN).

Further, the user A is able to obtain consumption data indicating the user A's power consumption in a fixed time period (for example, one month) from the control content management system 9, by accessing the control content management system 9 from the user A's mobile terminal 7A.

### Outline of Controlled System

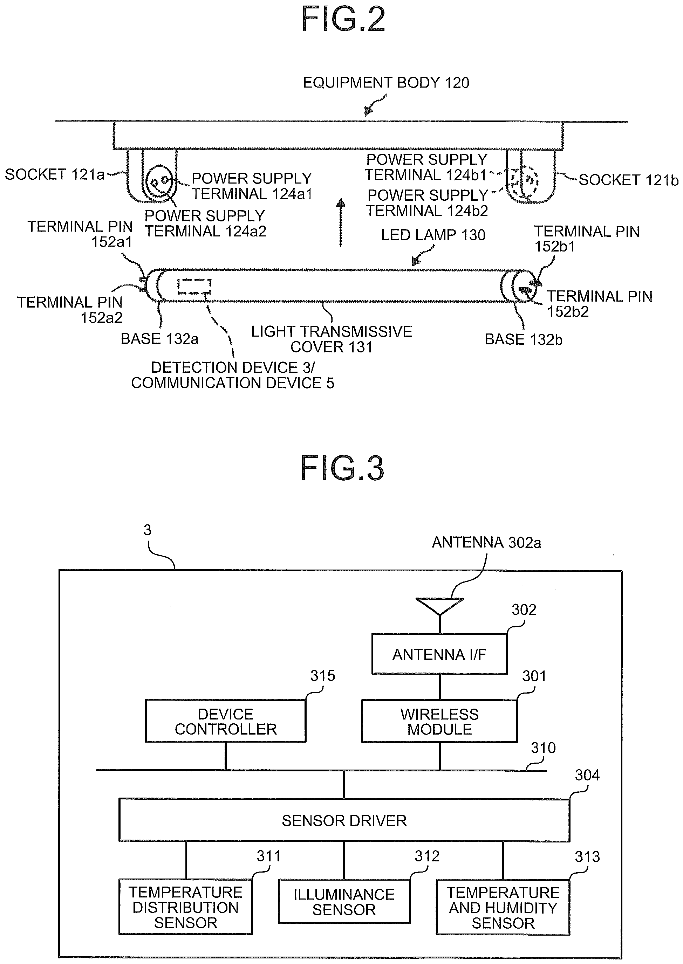

Next, by use of FIG. 2, the controlled system 2A and an equipment body for installation of the controlled system 2A will be described. FIG. 2 is an external appearance configuration diagram in a case where a controlled system is fluorescent lamp type LED lighting equipment.

As illustrated in FIG. 2, the controlled system 2A22 serving as the fluorescent lamp type LED lighting equipment is a straight tube type lamp 130, and is able to be attached to an equipment body 120 installed around a central portion of the ceiling β of the room α illustrated in FIG. 1. At both end portions of the equipment body 120, a socket 121a and a socket 121b are respectively provided. Among these, the socket 121a has power supply terminals (124a1 and 124a2) that supply power to the LED lamp 130. Further, the socket 121b also has power supply terminals (124b1 and 124b2) that supply power to the LED lamp 130. Thereby, the equipment body 120 is able to supply power from a power source to the LED lamp 130.

Furthermore, the LED lamp 130 has a light transmissive cover 131, bases (132a and 132b) provided respectively at both end portions of this light transmissive cover 131, and the detection device 3 inside the light transmissive cover 131. Among these, the light transmissive cover 131 is formed of, for example, a resin material, such as acrylic resin, and is provided to cover a light source inside the light transmissive cover 131.

Further, the base 132a has terminal pins (152a1 and 152a2), which are respectively connected to the power supply terminals (124a1 and 124a2) of the socket 121a, provided therein. Furthermore, the base 132b has terminal pins (152b1 and 152b2), which are respectively connected to the power supply terminals (124b1 and 124b2) of the socket 121b, provided therein. By installation of the LED lamp 130 in the equipment body 120, power is able to be respectively supplied from the terminal pins (152a1, 152a2, 152b1, and 152b2) via the power supply terminals (124a1, 124a2, 124b1, and 124b2) from the equipment body 120. Thereby, the LED lamp 130 emits light to outside via the light transmissive cover 131. Moreover, the detection device 3 is operated by the power supplied from the equipment body 120.

### Hardware Configuration of Power Control System

Hereinafter, a hardware configuration of the detection device 3 and the control content management system, which are main parts forming the power control system, will be described.

### Hardware Configuration of Detection Device

Next, by use of FIG. 3, a hardware configuration the detection device will be described. FIG. 3 is a hardware configuration diagram of the detection device. The detection device 3 includes a wireless module 301, an antenna I/F 302, an antenna 302a, a sensor driver 304, a temperature distribution sensor 311, an illuminance sensor 312, a temperature and humidity sensor 313, a device controller 315, and a bus line 310, such as an address bus or a data bus, for electrically connecting these components.

Among these, the wireless module 301 is a part for performing wireless communication, is able to perform communication according to a communication mode, such as that of Bluetooth (registered trademark), Wi-Fi, or ZigBee, and realizes wireless communication with an external device via the antenna I/F 302 and the antenna 302a. The communication mode may be, not only of wireless communication, but may be of wired communication, such as that with an Ethernet (registered trademark) cable or that of power line communications (PLC). The wireless module 301 operates under control by a communication control program.

The temperature distribution sensor 311 is a thermopile type sensor that detects a temperature distribution in the room α by detecting infrared light.

The illuminance sensor 312 is a sensor that detects illuminance in the room α. The temperature and humidity sensor 313 is a sensor that detects temperature and humidity in the room α.

The sensor driver 304 is a circuit that drives the temperature distribution sensor 311, the illuminance sensor 312, and the temperature and humidity sensor 313, and further generates, from temperature distribution data output from the temperature distribution sensor 311, heat source data indicating presence and absence of heat sources. Functions of the sensor driver 304 may be implemented by software. The device controller 315 is a circuit for performing lighting control for an LED if the device controller 315 is provided in the controlled system 2A. Further, the device controller 315 is a circuit for performing control of air flow rate and the like of the air conditioner if the device controller 315 is provided in the controlled system 2X11. These circuits are operated by a program that operates under control by software (for example, a detection control program stored in a memory, such as a RAM). The controlled systems 2A other than the controlled system 2A22 each include the wireless module 301, the antenna I/F 302, the antenna 302a, the bus line 310, and the device controller 315, of the configuration illustrated in FIG. 3.

### Hardware Configuration of Mobile Terminal

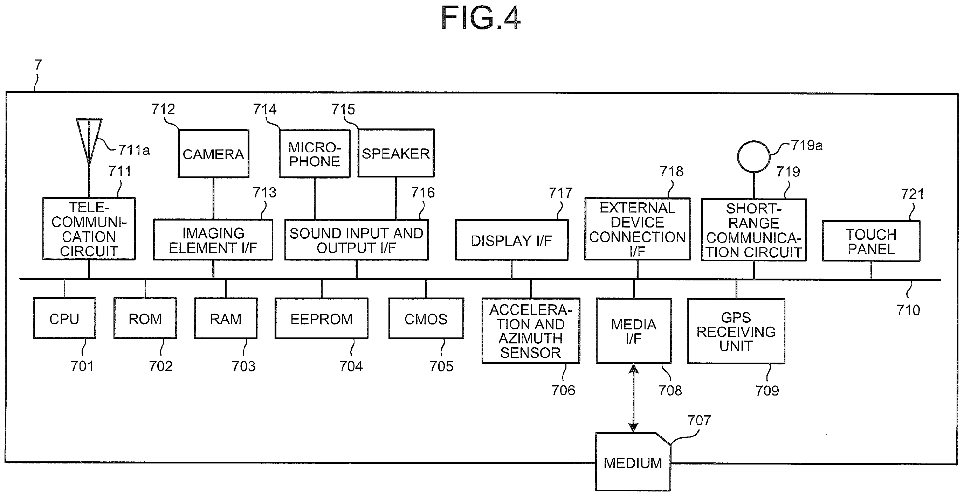

Next, a hardware configuration of a mobile terminal will be described. FIG. 4 is a hardware configuration diagram of a mobile terminal.

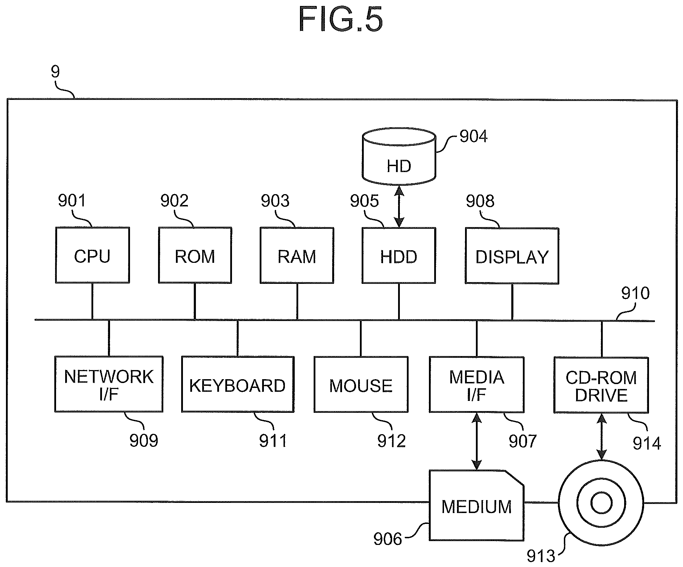

As illustrated in FIG. 5, a smartphone, which is an example of the mobile terminal 7, includes a CPU 701, a ROM 702, a RAM 703, an EEPROM 704, a CMOS sensor 705, an acceleration and azimuth sensor 706, a media I/F 708, and a GPS receiving unit 709.

Among these, the CPU 701 controls operation of the whole mobile terminal 7. The ROM 702 stores therein a program that is used: by the CPU 701; or in driving of the CPU 701; such as an IPL. The RAM 703 is used as a work area of the CPU 701. The EEPROM (electrically erasable and programmable ROM) 704 performs reading or writing of various data, such as a program for mobile terminals, according to control by the CPU 701. The CMOS (complementary metal oxide semiconductor) sensor 705 acquires image data by imaging a subject according to control by the CPU 701. The acceleration and azimuth sensor 706 is any of various sensors, such as an electromagnetic compass that detects terrestrial magnetism, a gyrocompass, and an acceleration sensor. The media I/F 708 controls reading or writing (storage) of data from and into a recording medium 707, such as a flash memory. The GPS receiving unit 709 receives a GPS signal from a GPS satellite.

Further, the smartphone includes a telecommunication circuit 711, a camera 712, an imaging element I/F, a microphone 714, a speaker 715, a sound input and output I/F, a display 717, an external device connection I/F 718, a short-range communication circuit 719, an antenna 719a of the short-range communication circuit, and a touch panel 721.

Among these, the telecommunication circuit 711 is a circuit that communicates with another device via the communication network 2, such as a mobile communication network. The camera 712 is one type of built-in imaging means that acquire image data by imaging a subject according to control by the CPU 701. The imaging element I/F 713 is a circuit that controls driving of the camera 712. The microphone 714 is one type of built-in sound collecting means that input sound. The sound input and output I/F 716 is a circuit that processes input and output of a sound signal between the microphone 714 and the speaker 715 according to control by the CPU 701. The display 715 is one type of display means, such as those of liquid crystal or organic EL, which display an image of a subject, various icons, and the like. The external device connection I/F 718 is an interface for connecting various external devices. The short-range communication circuit 719 is a communication circuit of NFC (registered trademark), Bluetooth (registered trademark), or the like. The touch panel 721 is one type of input means, through which the smartphone is operated, by a user pressing down on the display 717.

Further, the bus line 710 is an address bus, a data bus, or the like, for electrically connecting the components, such as the CPU 701, illustrated in FIG. 5.

The mobile terminal 7 may also be, instead of a smartphone, a notebook PC, a tablet terminal, a smartwatch, a portable telephone, a portable game console, or the like.

Further, each of the above described programs may be distributed by being recorded on a computer readable recording medium as a file in an installable format or an executable format. Examples of the recording medium include a compact disc recordable (CD-R), a digital versatile disk (DVD), a Blu-ray Disc, and an SD card.

### Hardware Configuration of Control Content Management System

Next, a hardware configuration of the control content management system will be described. FIG. 5 is a hardware configuration diagram of the control content management system.

The control content management system 9 is formed of a computer. The control content management system 9 includes: a CPU 901 that controls operation of the whole control content management system 9; a ROM 902 that stores therein a program used in driving of the CPU 901, such as an initial program loader (IPL); a RAM 903 that is used as a work area of the CPU 901; an HD 904 that stores therein various data, such as a positional information management program; a hard disk drive (HDD) 905 that controls reading or writing of various data from and into the HD 904 according to control by the CPU 901; a media I/F 907 that controls reading or writing (storage) of data from and into a recording medium 906, such as a flash memory; a display 908 that displays thereon various types of information, such as a cursor, a menu, a window, characters, or an image; a network I/F 909 for performing data communication by use of the communication network 7; a keyboard 911 including plural keys for input of characters, numerical values, various instructions, and the like; a mouse 912, through which selection and execution of various instructions, selection of targets to be processed, movement of the cursor, and the like are performed; a CD-ROM drive 914 that controls reading or writing of various data from and into a compact disc read only memory (CD-ROM) 913, which is an example of an attachable and detachable recording medium; and a bus line 910, such as an address bus or a data bus, for electrically connecting the above components.

### Functional Configuration of Power Control System

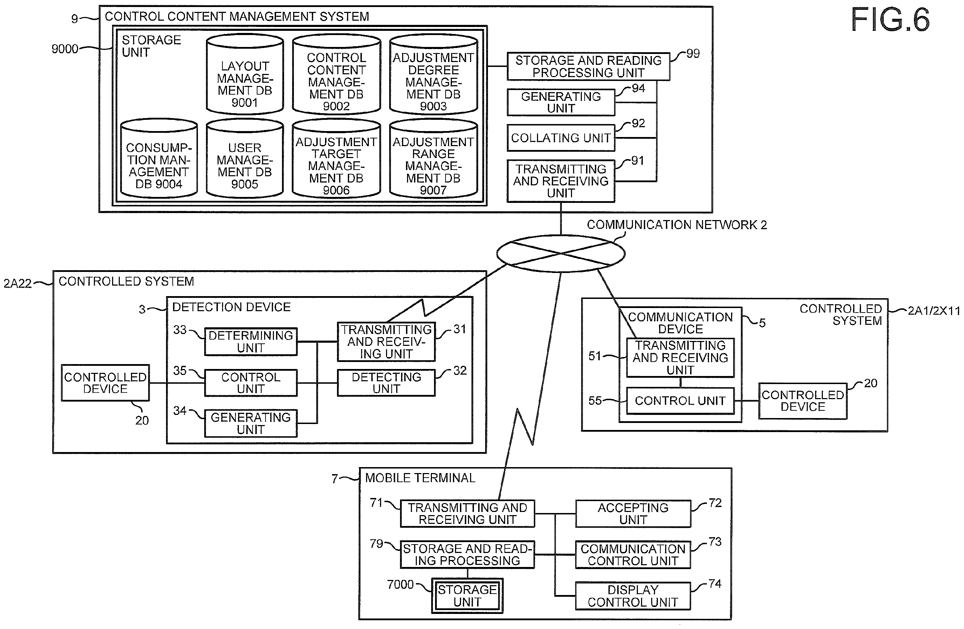

Next, by use of FIG. 6, a hardware configuration of the controlled system 2A22 including the detection device 3, the controlled system 2A11 (2X), and the control content management system 9 will be described. FIG. 6 is a functional configuration diagram of the power control system.

### Functional Configuration of Controlled System 2A22

Firstly, a functional configuration of the controlled system 2A22 will be described. The controlled system 2A22 is formed of the detection device 3 and a controlled device 20. Further, the detection device 3 has, as functions or means, a transmitting and receiving unit 31, a detecting unit 32, a determining unit 33, a generating unit 34, and a control unit 35. The controlled device 20 is, for example, the LED lamp 130, which is a target of lighting control.

In the detection device 3, the transmitting and receiving unit 31 is a function or means implemented by being operated by commands according to a program in the wireless module. For example, the transmitting and receiving unit 31 transmits and receives data to and from the control content management system 9 via the communication network 2.

The detecting unit 32 is a function or means implemented by operation of the sensors 311, 312, and 313. For example, the detecting unit 32 detects a temperature distribution of areas in a predetermined space.

The determining unit 33 is a function or means implemented by operation of the sensor driver 304. For example, the determining unit 33 determines whether a temperature in a predetermined area is in a predetermined range (for example, 30°C to 35°C).

The generating unit 34 is a function or means implemented by operation of the sensor driver 304. For example, based on a result of determination by the determining unit 33, the generating unit 34 generates heat source data indicating presence and absence of heat sources.

The control unit 35 is a function or means implemented by operation of the device controller 315. For example, based on control data transmitted from the control content management system 9, the control unit 35 generates a control signal to be output to the controlled device 20.

### Functional Configuration of Controlled System 2A11

Next, a functional configuration of the controlled system 2A11 will be described. The controlled system 2A11 is formed of a communication device 5 and a controlled device 20. Further, the communication device 5 has, as functions or means, a transmitting and receiving unit 51 and a control unit 55. The controlled device 20 is, for example, a light emitting function of an LED, which is a target of lighting control. In the case of the controlled system 2X11 serving as an air conditioner, the controlled device 20 is: a compressor of the air conditioner that controls temperature, humidity, air flow power, and air flow direction; or the like.

In the communication device 5, the transmitting and receiving unit 51 is a function or means implemented by being operated by commands according to a program in the wireless module. The transmitting and receiving unit 51 is a function or means similar to the above described transmitting and receiving unit 31, and thus description thereof will be omitted.

The control unit 55 is a function or means implemented by operation of the device controller 315. The control unit 55 is a function or means similar to the above described control unit 35, and thus description thereof will be omitted.

### Functional Configuration of Control Content Management System

Next, a functional configuration of the control content management system will be described. The control content management system 9 has a transmitting and receiving unit 91, a collating unit 92, a generating unit 94, and a storage and reading processing unit 99. Each of these units is a function or means implemented by being operated by commands from the CPU 901 according to the positional information management program expanded on the RAM 903 from the HD 904. Further, the control content management system 9 has a storage unit 9000 that is formed of the RAM 903 and HD 904 illustrated in FIG. 5. Further, the storage unit 9000 has a layout management DB 9001, a control content management DB 9002, an adjustment degree management DB 9003, a consumption management DB 9004, a user management DB 9005, an adjustment target management DB 9006, and an adjustment range management DB 9007, constructed therein.

### Layout Management DB

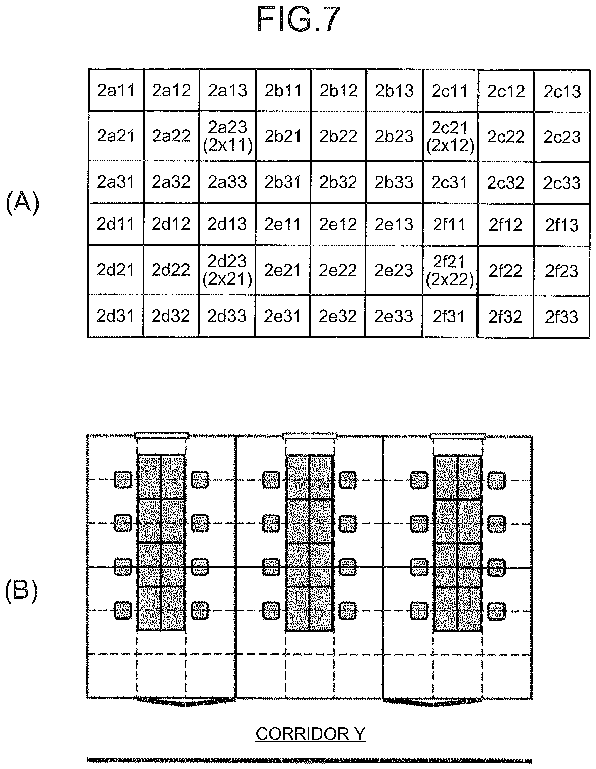

Next, by use of FIG. 7, the layout management DB 9001 will be described. In the layout management DB 9001, layout information of controlled systems as illustrated in FIG. 7(A), and layout information of a room as illustrated in FIG. 7(B) are managed. FIG. 7(A) is a conceptual diagram of layout information of controlled systems, and FIG. 7(B) is a conceptual diagram of layout information of a room.

Areas of the layout information illustrated in FIG. 7(A) represent areas divided by wavy lines or solid lines on an actual layout of the room α illustrated in FIG. 7(B).

Further, as illustrated in FIG. 7(A), in the layout information of the controlled systems, the single room α is divided into 54 areas, and a control target ID for identification of the controlled system serving as LED lighting equipment is managed for each of these areas. When a control target ID of one of these areas starts with "2", the area is on the second floor, and the block on the upper left side with the next digit of the control target IDs of the areas therein being "a" correspond to nine areas in FIG. 1. That is, FIG. 1 represents a part of the room α, and the room α is divided into six blocks represented by a, b, c, d, e, and f in their control target IDs. Furthermore, each of these blocks is divided into nine areas, and thus the room α is divided into a total of 54 areas. This division is just an example, and the room α may be divided into any number of blocks, and each block may be divided into any number of areas other than nine areas.

Further, in FIG. 7(A), control target IDs 2x11, 2x12, 2x21, and 2x22 are respectively control target IDs for identification of controlled systems 2X11, 2X12, 2X21, and 2X22 serving as air conditioners. Although the controlled systems 2X12, 2X21, and 2X22 are not illustrated in FIG. 1, the controlled systems 2X12, 2X21, and 2X22 are respectively installed on the ceiling β where 2x12, 2x21, and 2x22 are illustrated in FIG. 7(A). That is, on the ceiling β of the room α, four air conditioners are installed.

Further, FIG. 7(B) illustrates the actual layout where desks and chairs have been arranged. In FIG. 7(B) also, the same room as the room in FIG. 7(A) has been divided into 54 areas. That is, the position of each area in FIG. 7(B) is the same as the position of that area in FIG. 7(A). In FIG. 7(B), the lower side on the plane of paper is the corridor γ side, and the upper side on the plane of paper is the window side.

### Control Content Management DB

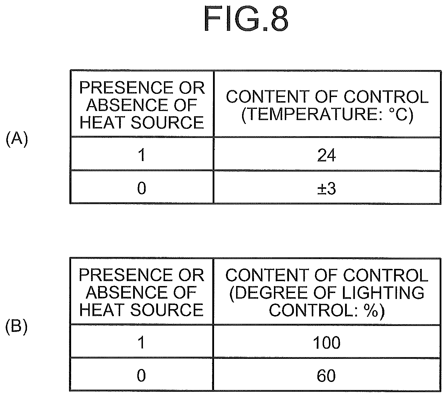

Next, by use of FIG. 8, the control content management DB 9002 will be described. As illustrated in FIG. 8(A), in the control content management DB, a control content management table related to air conditioning equipment, such as an air conditioner, and a control content management table related to lighting equipment, such as an LED, are managed. In each of these control content management tables, a control content for the controlled device 20 is managed in association with each piece of heat source presence or absence information.

In FIG. 8(A), for example, when the heat source presence or absence information is "1" indicating that there is a heat source, since there is a person in that area, the temperature of the air conditioner is set to 24°C. In contrast, when the heat source presence or absence information is "0" indicating that there is no heat source, since there is no person in that area, for energy saving, the temperature is set to +3°C (that is, 27°C) in summer and to -23°C (that is, 22°C) in winter. These settings 24°C and ±3°C are just an example, and may be 25°C and ±4°C, or the like, instead.

Further, for example, when the heat source presence or absence information is "1" indicating that there is a heat source, since there is a person in that area, the degree of lighting control is set to 100% for maximization of light quantity of the LED. In contrast, when the heat source presence or absence information is "0" indicating that there is no heat source, since there is no person in that area, for energy saving, the light quantity of the LED is decreased a little to 60%. These settings 100% and 60% are just an example, and may be 90% and 50%, or the like instead, as long as the degree of lighting control for the heat source "1" is higher than the degree of lighting control for the heat source "0". Further, a control content may correspond to humidity, air flow rate, air flow direction, or the like, instead of temperature.

### Adjustment Degree Management Table

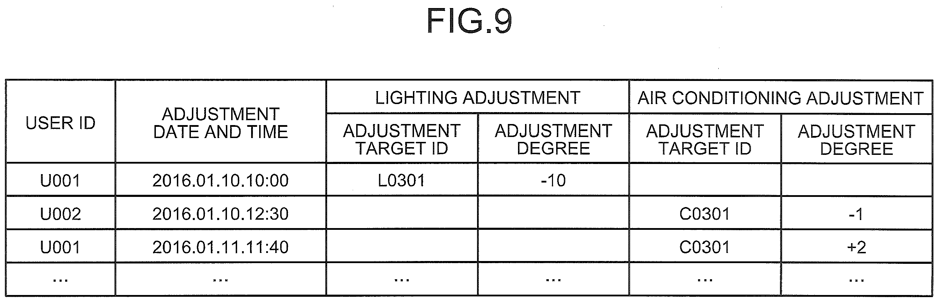

Next, by use of FIG. 9, the adjustment degree management DB 9003 will be described. In the adjustment degree management DB 9003, an adjustment degree management table as illustrated in FIG. 9 is managed. In this adjustment degree management table, for each user ID: an adjustment date and time; an adjustment target ID and an adjustment degree for lighting adjustment; and an adjustment target ID and an adjustment degree for air conditioning adjustment, are managed in association with one another. Among these, each user ID is an example of user identification information for identification of a user. Each adjustment date and time indicates the date and time when the user adjusted the control content for lighting or the control content for air conditioning by using a mobile terminal. Each adjustment target ID is an example of adjustment target identification information for identification of a target adjusted by the user. Each adjustment degree represents the degree of lighting control for lighting equipment, and represents the degree of change of temperature for air conditioning equipment.

For example, the uppermost record in the adjustment degree management table (see FIG. 9) is for management of the fact that a user of a user ID, "U001", requested the degree of lighting control for an adjustment target of an adjustment target ID, "L301", to be decreased by 10%, at 10:00 on January 10, 2016, by using the mobile terminal 7, even in a case where the control content management system 9 had controlled, based on the control content management table (see FIG. 8), the degree of lighting control to be 100% since the user A is present in the room α.

### Consumption Management Table

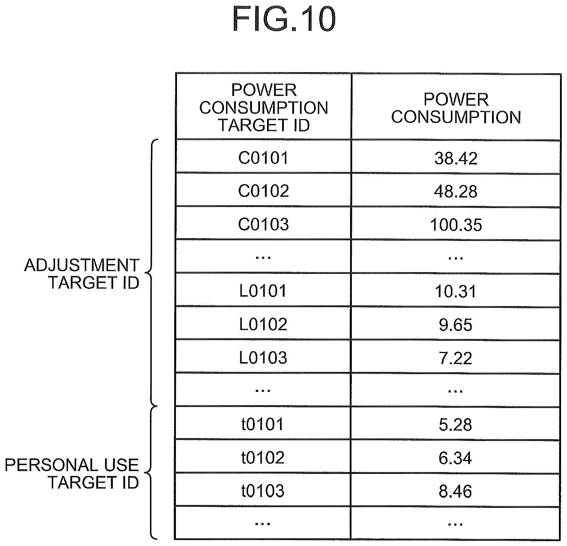

Next, by use of FIG. 10, the consumption management DB 9004 will be described. In this consumption management DB 9004, a consumption management table as illustrated in FIG. 10 is managed. In this consumption management table, power consumption target IDs and power consumptions in a fixed time period (for example, one month) are managed in association with each other. Among these, there are two types of power consumption target IDs, which are adjustment target IDs and personal use target IDs. An adjustment target ID indicates the same content as the adjustment target ID in the adjustment degree management table (see FIG. 9). A personal use target ID is an example of personal use target identification information for identification of a device personally used by a user, like, for example, the power source tap 2T.

### User Management Table

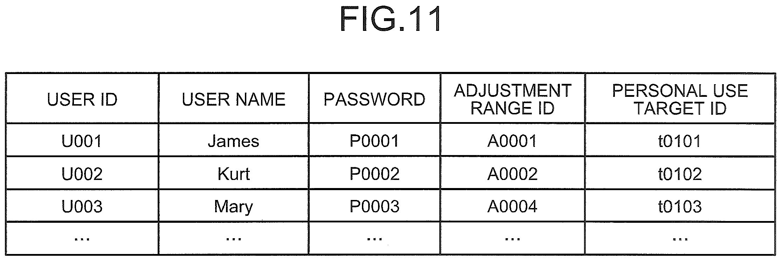

Next, by use of FIG. 11, the user management DB 9005 will be described. In this user management DB 9005, a user management table as illustrated in FIG. 10 is managed. In this user management table, user IDs, user names, passwords, adjustment range IDs, and personal use target IDs are managed in association with one another. Among these, the user IDs are the same as the user IDs in the adjustment degree management table (see FIG. 9). An adjustment range ID is an example of adjustment range identification information indicating a range of control targets, for which a user is able to adjust control contents. The personal use target IDs are the same as the personal use target IDs in the consumption management table (see FIG. 10). For example, for a device used by an individual and unable to be adjusted by a user through use of the mobile terminal 7, like the power source tap 2T; the personal use target ID is managed, instead of the adjustment range.

### Adjustment Target Management Table

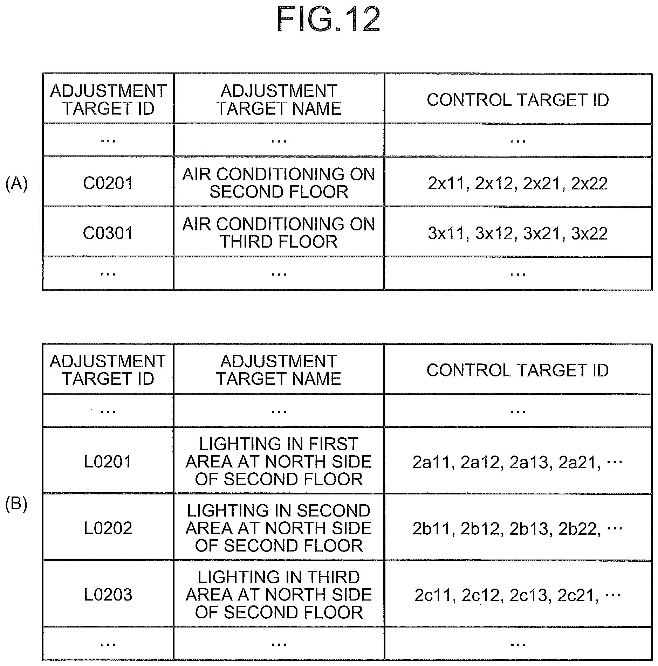

Next, by use of FIG. 12, the adjustment target management DB 9006 will be described. In the adjustment target management DB 9006, an adjustment target management table related to air conditioning equipment, such as air conditioners, as illustrated in FIG. 12(A), and an adjustment target management table related to lighting equipment, such as LEDs, as illustrated in FIG. 8(B), are managed. In each of these adjustment target management tables, adjustment target IDs, adjustment target names, and control target IDs are managed in association with one another. Among these, the adjustment target IDs are the same as the adjustment target IDs in the adjustment degree management table (see FIG. 9). The adjustment target names are names of adjustment targets represented by the adjustment target IDs. The control target IDs are the same as the control target IDs indicated by the layout information (see FIG. 7(A)). As illustrated in FIG. 12(A) and (B), plural control target IDs are associated with a single adjustment target ID. Thereby, for example, as illustrated in FIG. 12(A), when a user selects a single adjustment target, air conditioning equipment represented by plural control target IDs associated with that adjustment target is adjusted simultaneously.

### Adjustment Range Management Table

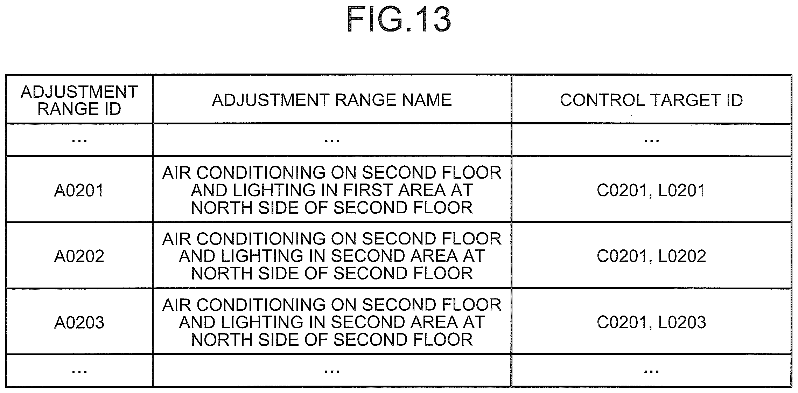

Next, by use of FIG. 13, the adjustment range management DB 9007 will be described. As illustrated in FIG. 13, in the adjustment range management DB 9007, for each adjustment range ID, an adjustment range name and adjustment target IDs are managed in association therewith. Among these, the adjustment range IDs are an example of adjustment range identification information for identification of adjustment ranges. The adjustment target names are names of adjustment ranges indicated by the adjustment range IDs. The adjustment target IDs are the same as the adjustment target IDs in the adjustment target management table (see FIG. 12).

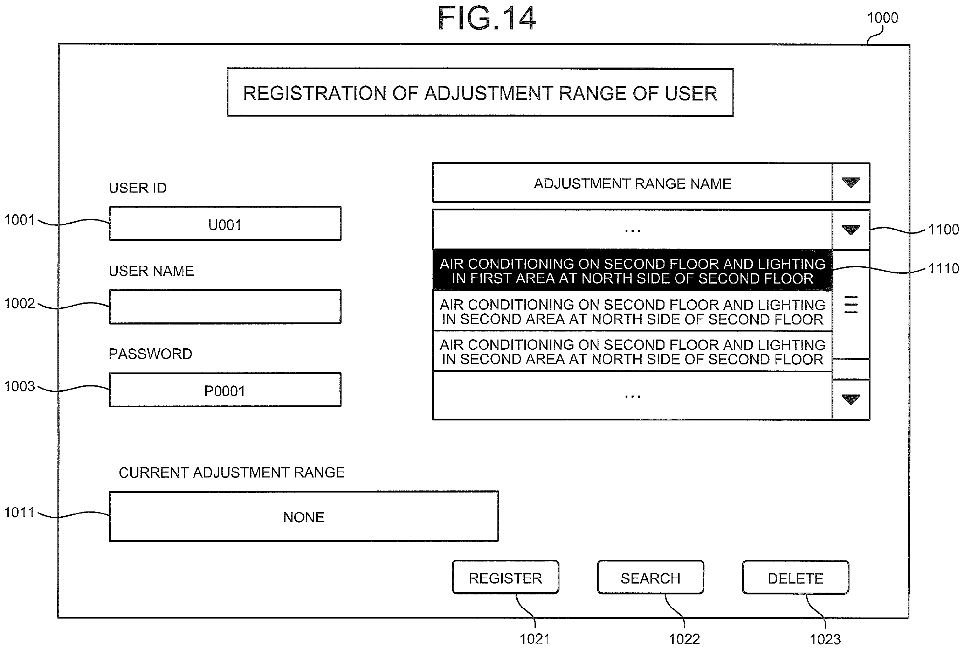

According to this embodiment, an administrator of the control content management system 9 is able to register an adjustment range of each user by performing predetermined input and selection on a registration screen 1000 for adjustment ranges in the control content management system 9, as illustrated in FIG. 14. FIG. 14 is a diagram illustrating an example of the registration screen for adjustment ranges.

For example, in FIG. 14, a range of adjustment targets adjustable by a user is registered with the control content management system 9 when the administrator performs predetermined input into an entry field 1001 for a user ID to be registered or an entry field 1002 for a user name to be registered and into a user password entry field 1003, selects a predetermined adjustment range name 1110 from a pulldown menu 1100 of plural adjustment range names, and presses down a "Register" button. Thereby, the user is able to adjust control contents for adjustment targets in the user's own adjustment range. A current adjustment range field 1011 is a field where an adjustment range name of a user is displayed, when an adjustment range has been registered already and the administrator inputs a user ID or a user name and a password and presses down a "Search" button 1022, the user corresponding to the input user ID or user name. Further, if the administrator presses down a "Delete" button 1022 in a state where the adjustment range name has been displayed, the adjustment range that has been registered already is deleted.

### Functional Configuration of Control Content

### Management System

Next, by use of FIG. 6, a functional configuration of the control content management system 9 will be described.

For example, the transmitting and receiving unit 91 illustrated in FIG. 6 receives detected data from the detection device 3, and transmits control data to the detection device 3.

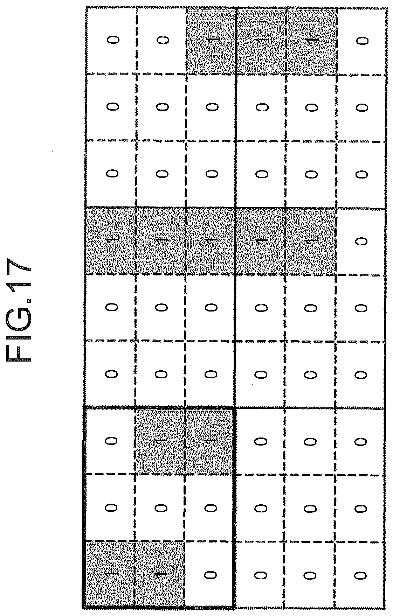

The collating unit 92 collates, for example, the later described layout information illustrated in FIG. 7(A) with later described heat source data illustrated in FIG. 17.

The generating unit 84 generates, for example, control data indicating degrees of lighting control for the controlled systems 2A and 2X.

For example, the storage and reading processing unit 99 reads data from a storage unit 8000, and stores data into the storage unit 8000.

### Processing or Operation of Power Control System

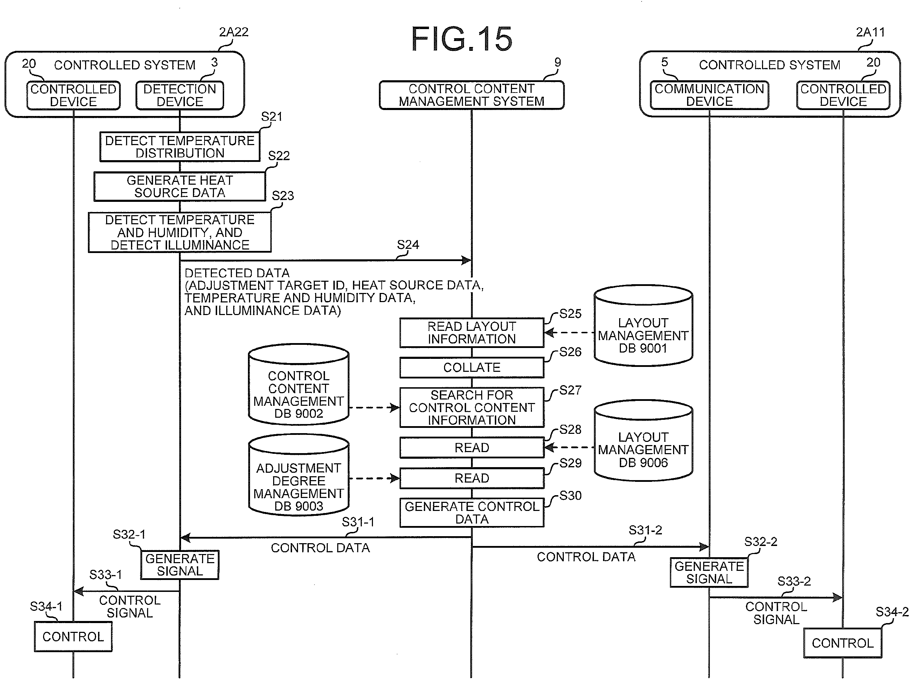

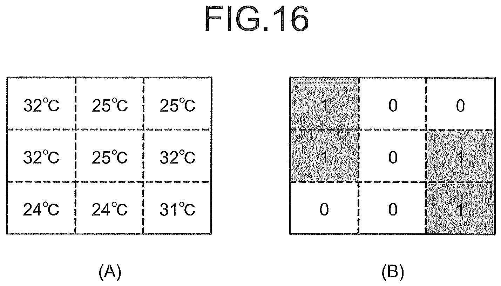

Hereinafter, by use of FIG. 15 to FIG. 24, processing or operation of the power control system will be described. FIG. 15 is a sequence diagram illustrating processing of the power control system. FIG. 16(A) is a conceptual diagram illustrating a temperature distribution, and FIG. 16(B) is a conceptual diagram of heat source data indicating presence and absence of heat sources. FIG. 17 is a conceptual diagram of heat source data indicating presence and absence of all of heat sources in one room.

Disclosed herein is processing where the controlled systems 2A22, 2A11, and the like control lighting, by the control content management system 9: generating, based on various data detected by the controlled system 2A22 illustrated in FIG. 1, control data for control of the controlled systems 2A22, 2A11, and the like; and transmitting the control data to the controlled systems 2A22, 2A11, and the like. For simplification of the explanation, among the controlled systems 2A and 2X, processing of the controlled system 2A22 including the detection device 3, and the controlled system 2A11 including the communication device 5 will be described.

Firstly, as illustrated in FIG. 15, the detecting unit 32 of the controlled system 2A22 that is lighting equipment detects a temperature distribution of the areas in the room α (Step S21). The determining unit 33 then determines whether or not the temperature in each area is in a predetermined range (for example, 30°C to 35°C), and the generating unit 34 generates heat source data based on a result of this determination (Step S22).

By use of FIG. 16, the generation of the heat source data will be described. When a temperature distribution of nine areas is in a state illustrated in FIG. 16(A) as a result of the detection of the temperature in each area by the detecting unit 32, the generating unit 34 generates heat source data as illustrated in FIG. 16(B). That is, the heat source data are represented by heat source presence or absence information indicating presence and absence of heat sources, and an area with a temperature equal to or higher than 30°C is represented by "1", and an area with a temperature less than 30°C is represented by "0".

Further, the detecting unit 32 of the controlled system 2A22 detects illuminance, temperature, and humidity, around the controlled system 2A22 (Step S23). The transmitting and receiving unit 31 then transmits the detected data to the control content management system 9 (Step S24). The detected data include the control target ID for identification of the controlled device 20 of the controlled system 2A22, the heat source data generated through Step S22, and temperature and humidity data and illuminance data representing results detected through Step S23. Thereby, the transmitting and receiving unit 91 of the control content management system 9 receives the detected data. Data in a state where the transmitting and receiving unit 91 has combined together the heat source data transmitted from the blocks are illustrated in FIG. 17. FIG. 17 is a conceptual diagram of heat source data indicating presence and absence of all of heat sources in one room. For example, the heat source data illustrated in FIG. 16(B) constitute the first block on the upper left in FIG. 17.

Subsequently, the storage and reading processing unit 59 of the control content management system 9 reads, from the layout management DB 9001, the layout information illustrated in FIG. 7(A) (Step S25) The collating unit 92 then collates the layout information illustrated in FIG. 7(A) with the heat source data illustrated in FIG. 17 (Step S26). According to this collation, from the heat source data, for example, "1" is, that is, "there is a heat source", at the position (2a11) of the controlled system in the layout information.

Subsequently, by searching through the control content management DB 9002 with "1" and "0" being search keys indicating presence and absence of heat sources in the heat source data, the storage and reading processing unit 59 of the control content management system 9 reads degrees of lighting control corresponding thereto (Step S27).

Subsequently, by searching through the adjustment target management table (see FIG. 12) with the adjustment target ID being a search key, the adjustment target ID having been received through Step S24, the storage and reading processing unit 59 reads an adjustment target ID corresponding thereto (Step S28). By searching through the adjustment degree management table (see FIG. 9) with the adjustment target ID being a search key, the adjustment target ID having been read through Step S28, the storage and reading processing unit 59 then reads adjustment degrees of a fixed time period (for example, one month) in the past (Step S29).

The generating unit 84 then generates control data indicating the control content for the controlled system 2A11 (Step S30). In this case, for example, control data indicating the control content that has been adjusted are generated by addition of the average value of the past adjustment degrees in the control content management table (see FIG. 8(B)) to the control content retrieved at Step S27. For the controlled system 2X serving as an air conditioner, the generating unit 84 generates control data indicating temperature.

As described above, since the control content management system 9 not only determines a control content according to presence or absence of a heat source, but also determines the final control content by causing past adjustment degrees from users to be reflected therein, an effect of enabling lighting control matching the actual conditions more is able to be achieved.

Subsequently, the transmitting and receiving unit 51 respectively transmits the control data to the controlled systems 2A22 and 2A11 (Steps S31-1 and S31-2). In response, the transmitting and receiving unit 31 in the detection device 3 of the controlled system 2A22 receives the control data. Further, the transmitting and receiving unit 51 in the communication device 5 of the controlled system 2A11 receives the control data.

Subsequently, in the controlled system 2A22, the control unit 35 of the detection device 3 generates, based on the control data, a control signal to be output to the controlled device 20 serving as an LED lamp (Step S32-1), and outputs the control signal to the controlled device 20 (Step S33-1). Thereby, the light quantity of the controlled device 20 serving as the LED lamp is controlled (Step S34-1). Similarly, in the controlled system 2A11, the control unit 55 of the communication device 5 generates, based on the control data, a control signal to be output to the controlled device 20 serving as an LED lamp (Step S32-2), and outputs the control signal to the controlled device 20 (Step S33-2). Thereby, the light quantity of the controlled device 20 serving as the LED lamp is controlled (Step S34-2).

For example, if past adjustment degrees are not available, or the average of past adjustment degrees is 0, since in FIG. 16(A), "0" indicates that there is no heat source directly under the controlled system 2A22, the control content for the controlled system 2A22 will be a degree of lighting control of 60% according to FIG. 8. On the contrary, since in FIG. 16(A), "1" indicates that there is a heat source directly under the controlled system 2A11, the control content for the controlled system 2A11 will be a degree of lighting control of 100% according to FIG. 8. Thereby, if a heat source is detected due to presence of a person, the light quantity of the LED is set to the maximum, and if a heat source is not detected due to absence of a person, the light quantity of the LED is decreased, and thus energy saving is able to be realized.

Further, for example, if past adjustment degrees are available and the average of these past adjustment degrees is -10, since in FIG. 16(A), "0" indicates that there is no heat source directly under the controlled system 2A22, the control content for the controlled system 2A22 will be an adjustment degree of 60% according to FIG. 8, but the control content after adjustment will become 50%. On the contrary, since in FIG. 16(A), "1" indicates that there is a heat source directly under the controlled system 2A11, the control content for the controlled system 2A11 will be a degree of lighting control of 100% according to FIG. 8, but the control content after adjustment will become 90%.

Thereby, since the control content management system 9 not only determines a control content according to presence or absence of a heat source, but also causes past adjustment degrees from users to be reflected therein (Steps S28 and S29), generates control data indicating the final control content (Step S30), and transmits the control data to the controlled system 2A22 or the like (Step S31-1 or S31-2), an effect of enabling lighting control matching the actual conditions more is able to be achieved.

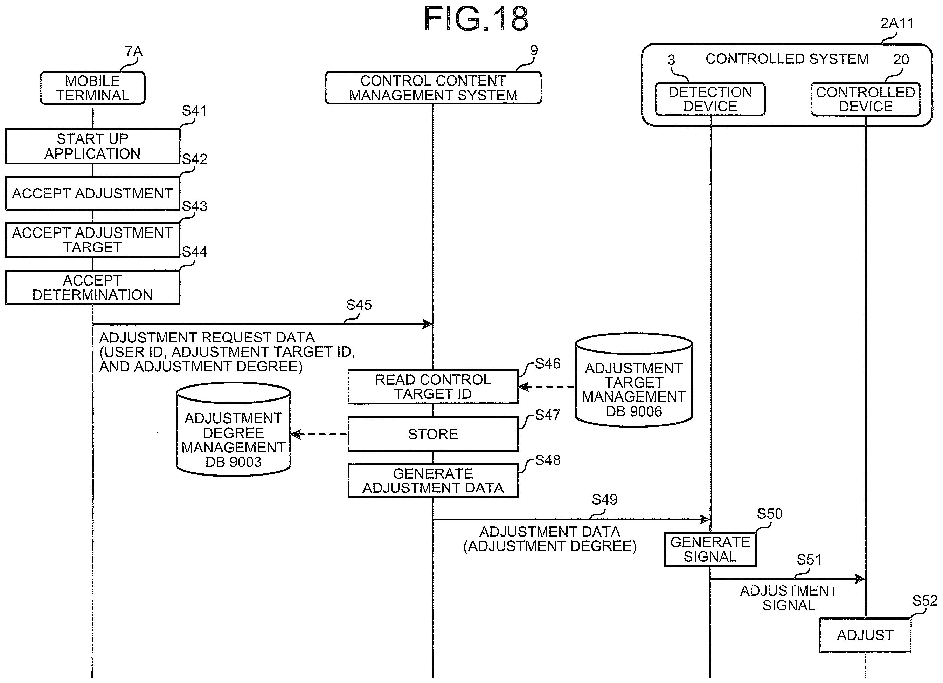

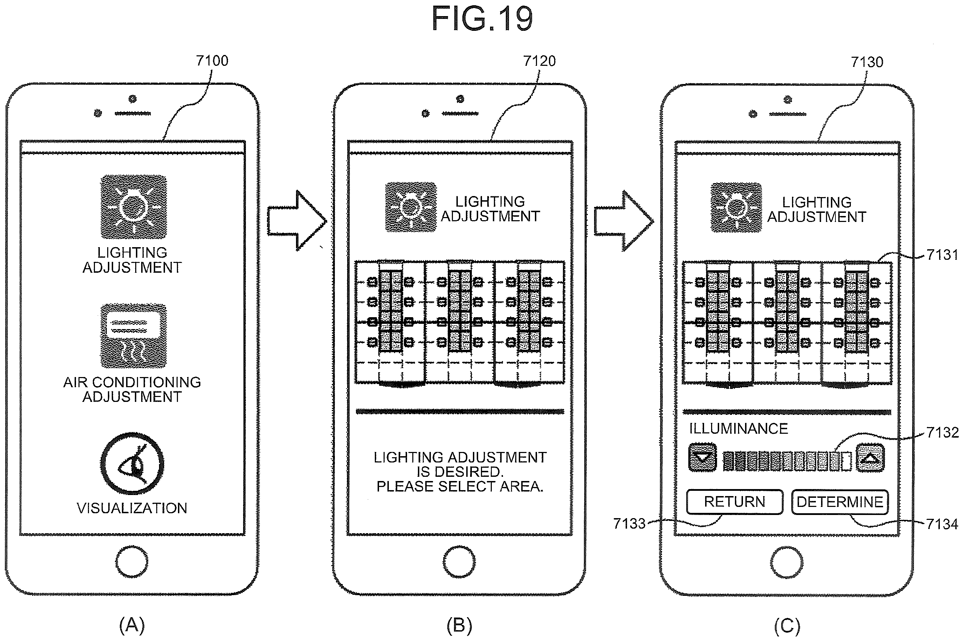

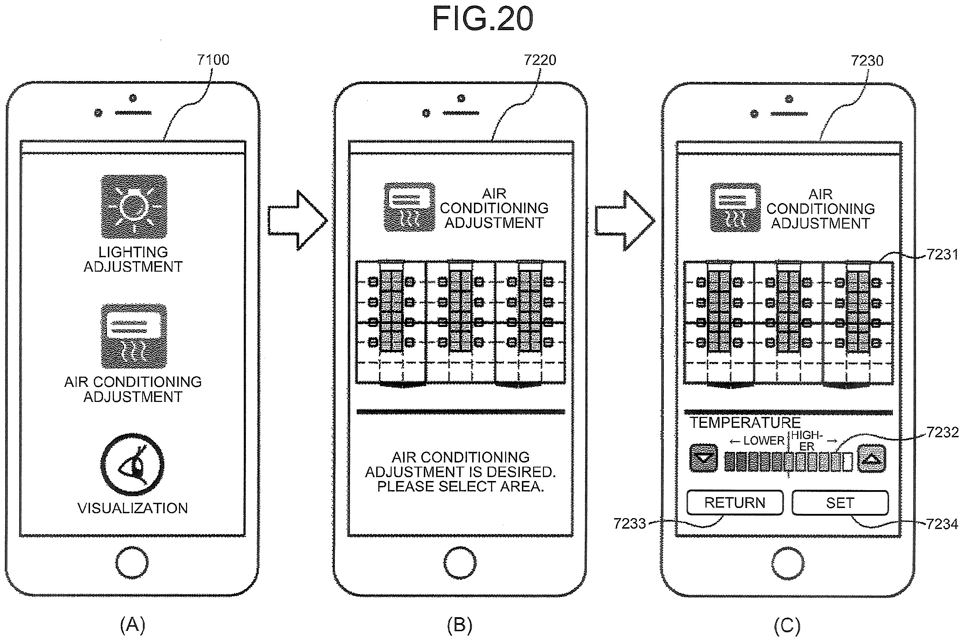

Next, by use of FIG. 18 to FIG. 20, adjustment processing for a control content by a user will be described. FIG. 18 is a sequence diagram illustrating adjustment processing for a control content. FIG. 19 is a screen transition diagram for a mobile terminal upon lighting adjustment. FIG. 20 is a screen transition diagram for a mobile terminal upon air conditioning adjustment. Explained herein will be a case where, as illustrated in FIG. 1, the user A adjusts control contents for the controlled systems (2A11, 2A12, 2A13, 2A21, 2A22, 2A23, 2A31, 2A32, and 2A33) that are control targets in an adjustment range altogether by using the user A's own mobile terminal 7A. For simplification of explanation, FIG. 18 illustrates adjustment processing for a control content for the controlled system 2A11.

Firstly, when an application for adjustment is started up in the mobile terminal 7A through operation by the user A, the display control unit 74 causes an initial screen 7100 to be displayed, as illustrated in FIG. 19(A) (Step S41). When the user A presses down a "Lighting Adjustment" icon, an accepting unit 72 accepts start of lighting adjustment, and as illustrated in FIG. 19(B), the display control unit 74 causes an adjustment target selection screen 7120, which depicts a layout diagram of a room for selection of an adjustment target, to be displayed (Step S42).

Subsequently, when the user A selects an adjustment target from the layout diagram of the room, the accepting unit 72 accepts the adjustment target, and as illustrated in FIG. 19(C), the display control unit 74 causes an adjustment degree setting screen 7130, which is for setting of an adjustment degree, to be displayed (Step S43). This adjustment degree setting screen 7130 has a layout diagram 7131 of the room depicting the adjustment target, an adjustment degree setting section 7132, a "Return" button 7133 for return to the previous screen, and a "Determine" button 7134 for determination of a set adjustment target and adjustment degree. One memory of the adjustment degree setting section 7132 represents, for example, a degree of lighting control of 10%.

Subsequently, when the user A sets an adjustment degree in the adjustment degree setting section 7132, and presses down the "Determine" button 7134, the accepting unit 72 accepts the determination (Step S44). Thereby, the transmitting and receiving unit 71 of the mobile terminal 7A transmits adjustment request data to the control content management system 9 (Step S45). The adjustment request data include the user ID of the user A of the mobile terminal 7A that is the transmission source, the adjustment target ID accepted at Step S43, and the adjustment degree accepted at Step S44. Thereby, the transmitting and receiving unit 91 of the control content management system 9 receives the adjustment request data.

Subsequently, by searching through the adjustment target management table (see FIG. 12) with the adjustment target ID being a search key, the adjustment target ID having been received through Step S45, the storage and reading processing unit 99 of the control content management system 9 reads control target IDs corresponding thereto (Step S46).

Subsequently, the storage and reading processing unit 99 associates the adjustment request data (the user ID, the adjustment target ID, and the adjustment degree) received at Step S45, with the adjustment date and time indicating the date and time when the transmitting and receiving unit 71 received the adjustment request data, and stores and manages the associated data as a new record in the adjustment degree management table (see FIG. 9) (Step S47). The generating unit 94 then generates adjustment data for adjustment of the control content of the controlled device 20 of the controlled system 2A11 (Step S48). The adjustment data include the adjustment degree received at Step S45.

Subsequently, the transmitting and receiving unit 91 of the control content management system 9 transmits adjustment data to the detection device 3 of each of the controlled systems 2A indicated by the control target IDs read at Step S46 (Step S49). Illustrated herein for simplification of explanation is a case where the adjustment data are transmitted to the controlled system 2A11, among the controlled systems 2A indicated by the control target IDs read at Step S46. Thereby, the transmitting and receiving unit 31 of the detection device 3 of the controlled system 2A11 receives the adjustment data.

Subsequently, in the controlled system 2A11, the control unit 35 of the detection device 3 generates, based on the adjustment data, an adjustment signal to be output to the controlled device 20 serving as an LED lamp (Step S50), and outputs the adjustment signal to the controlled device 20 (Step S51). Thereby, the light quantity of the controlled device 20 serving as the LED lamp is adjusted (Step S52).

With respect to FIG. 18, adjustment of lighting control has been described; and similar processing is executed for adjustment of air conditioning. FIG. 20 illustrates an example of screens for adjustment of air conditioning. Among these, FIG. 20(A), (B), and (C) respectively correspond to FIG. 19(A), (B), and (C). Further, reference numerals 7220, 7230, 7231, 7232, 7233, and 7234 respectively correspond to the reference numerals 7120, 7130, 7131, 7132, 7133, and 7134.

As described above, the control content management system 9 achieves an effect of enabling lighting control matching the actual conditions more, because after a control content is determined according to presence and absence of a heat source, adjustment data for adjustment of the control content are generated based on a request (Step S45) from a user (Step S48), and the adjustment data are transmitted to the controlled system 2A11 or the like (Step S49) .

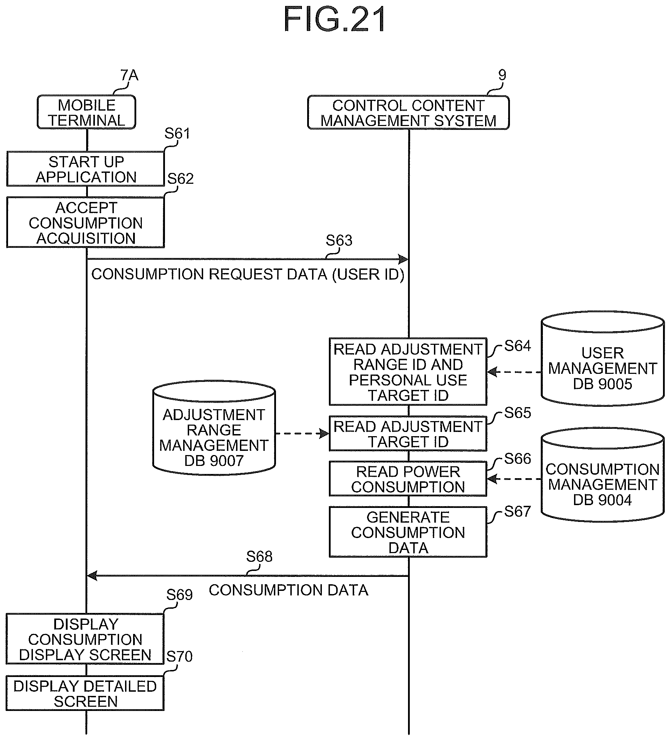

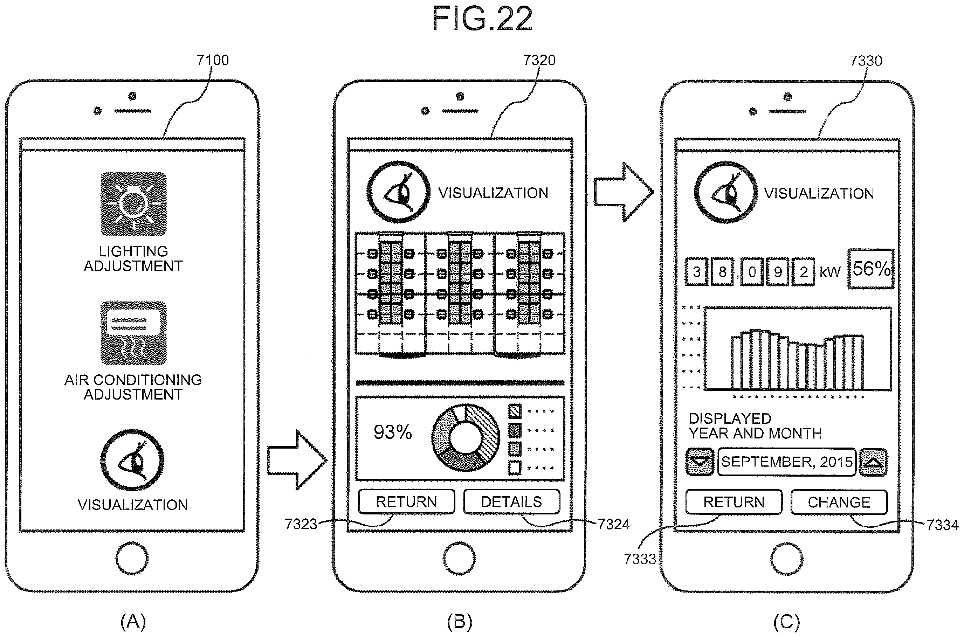

Next, by use of FIG. 21 and FIG. 22, processing for display of power consumption will be described. FIG. 21 is a sequence diagram illustrating the processing for display of power consumption. FIG. 22 is a screen transition diagram of a mobile terminal upon display of electric power consumption.

Firstly, when an application for adjustment is started up in the mobile terminal 7A through operation by the user A, the display control unit 74 causes an initial screen 7100 to be displayed, as illustrated in FIG. 22(A) (Step S61). When the user A presses down a "Visualization" icon, the accepting unit 72 accepts a request for power consumption data (Step S62). Thereby, the transmitting and receiving unit 71 of the mobile terminal 7A transmits consumption request data to the control content management system 9 (Step S63). The consumption request data include the user ID of the user A of the mobile terminal 7A that is the transmission source thereof. Thereby, the transmitting and receiving unit 91 of the control content management system 9 receives the consumption request data.

Subsequently, by searching through the user management table (see FIG. 11) with the user ID being a search key, the user ID having been received through Step S63, the storage and reading processing unit 99 of the control content management system 9 reads an adjustment range ID and a personal use target ID corresponding thereto (Step S64). By searching through the adjustment range management table (see FIG. 13) with the adjustment range ID being a search key, the adjustment range ID having been read at Step S46, the storage and reading processing unit 99 reads control target IDs corresponding thereto (Step S65) .

Subsequently, by searching through the consumption management table (see FIG. 10) with the personal use target ID and the control target IDs being search keys, the personal user target ID having been read at Step S46, the control target IDs having been read at Step S47, the storage and reading processing unit 99 reads power consumptions corresponding thereto (Step S66). By executing data processing, such as graphing, based on the power consumptions, the generating unit 94 generates consumption data (Step 67).

Subsequently, the transmitting and receiving unit 91 of the control content management system 9 transmits the consumption data to the mobile terminal 7A that is the transmission source at Step S63 (Step S68). Thereby, the transmitting and receiving unit 71 of the mobile terminal 7A receives the consumption data.

Subsequently, as illustrated in FIG. 22(B), the display control unit 73 of the mobile terminal 7A displays a consumption data display screen 7320 (Step S69). This consumption data display screen 7320 has a layout diagram, power consumption, and the like, displayed thereon. Further, the consumption data display screen 7320 has a "Return" button 7323 for return to the initial screen 7100, and a "Details" button 7324 for advancement to a detailed consumption data screen 7330 illustrated in FIG. 22(C), displayed thereon.

When the user A presses down the "Details" button 7324, the accepting unit 72 accepts the press-down, and the display control unit 74 displays the detailed consumption data screen 7330 illustrated in FIG. 22(C) (Step S70). This detailed consumption data screen 7330 has more detailed information displayed thereon. Further, the detailed consumption data screen 7330 has a "Return" button 7333 for return to the consumption data display screen 7320, and a "Change" button 7334 for change of the year and month of the power consumption, displayed thereon.

As described above, since in the control content management system 9, consumption data are generated and transmitted to the mobile terminal 7, a user is able to visually grasp how much the user's own adjustment of a control content has contributed to energy saving, the consumption data being for representation, through numerical values, a graph, and the like, of not only a power consumption of the power source tap 2T that is a target of personal use and not a target of adjustment, but also power consumptions of a group of lighting equipment and air conditioning equipment that are targets of adjustment. Thereby, the user's awareness of energy saving is able to be improved, and the user is encouraged to take action for adjustment of control contents for further energy saving.

As a result of the association between the user IDs and the adjustment range IDs in the user management table (see FIG. 11), as well as the association between the adjustment range IDs and the adjustment target IDs in the adjustment degree management table (see FIG. 13), the user IDs are associated with the adjustment target IDs, but the association is not limited to this example. For example, in the user management table (see FIG. 11), by replacement of the adjustment range IDs with the adjustment target IDs, the user IDs may be directly associated with the adjustment target IDs.

### Main Effects of Embodiment

As described above, according to this embodiment, the control content management system 9 achieves an effect of enabling lighting control matching the actual conditions more, because not only a control content is determined according to presence or absence of a heat source, but also past adjustment degrees from users are caused to be reflected therein (see Steps S28 and S29), control data indicating the final control content (see Step S30) are generated, and the control data are transmitted to the controlled system 2A22 or the like (see Step S31-1 or S31-2).

Further, the control content management system 9 achieves an effect of enabling lighting control matching the actual conditions more, because after a control content is determined according to presence or absence of a heat source, adjustment data for adjustment of the control content are generated based on a request (see Step S45) from a user (see Step S48), and the adjustment data are transmitted to the controlled system 2A11 or the like (see Step S49).

Further, since in the control content management system 9, consumption data are generated (see Step S67) and transmitted to the mobile terminal 7 (see Step S68), a user is able to visually grasp how much the user's own adjustment of a control content has contributed to energy saving, the consumption data being for representation, through numerical values, a graph, and the like, of not only a power consumption of the power source tap 2T that is a target of personal use and not a target of adjustment, but also power consumptions of a group of lighting equipment and air conditioning equipment that are targets of adjustment. Achieved thereby is an effect of enabling the user's awareness of energy saving to be improved, and the user to be encouraged to take action for adjustment of control contents for further energy saving.

### Reference Signs List

1 POWER CONTROL SYSTEM
2A11 CONTROLLED SYSTEM
2A22 CONTROLLED SYSTEM
2X11 CONTROLLED SYSTEM
3 DETECTION DEVICE
5 COMMUNICATION DEVICE
6 WIRELESS ROUTER
7 COMMUNICATION NETWORK
8 CONTROL CONTENT MANAGEMENT SYSTEM
20 CONTROLLED UNIT
31 TRANSMITTING AND RECEIVING UNIT
32 DETECTING UNIT
33 DETERMINING UNIT
34 GENERATING UNIT
35 CONTROL UNIT
51 TRANSMITTING AND RECEIVING UNIT
55 CONTROL UNIT
91 TRANSMITTING AND RECEIVING UNIT (EXAMPLE OF TRANSMITTING MEANS AND EXAMPLE OF RECEIVING MEANS)
92 COLLATING UNIT
94 GENERATING UNIT (EXAMPLE OF GENERATING MEANS)
99 STORAGE AND READING PROCESSING UNIT
8000 STORAGE UNIT
9001 LAYOUT MANAGEMENT DB
9002 CONTROL CONTENT MANAGEMENT DB (EXAMPLE OF CONTROL CONTENT MANAGEMENT MEANS)
9003 ADJUSTMENT DEGREE MANAGEMENT DB (EXAMPLE OF ADJUSTMENT DEGREE MANAGEMENT MEANS)
9004 CONSUMPTION MANAGEMENT DB (EXAMPLE OF CONSUMPTION MANAGEMENT MEANS)
9005 USER MANAGEMENT DB (EXAMPLE OF USER MANAGEMENT MEANS)
9006 ADJUSTMENT TARGET MANAGEMENT DB (EXAMPLE OF ADJUSTMENT TARGET MANAGEMENT MEANS)
9007 ADJUSTMENT RANGE MANAGEMENT DB (EXAMPLE OF ADJUSTMENT RANGE MANAGEMENT MEANS)

### Citation List

### Patent Literature

Patent Literature 1: Japanese Patent No. 4340925

## Claims

1. A control content management system that is able to communicate with a detection device, which detects temperature of a predetermined space, and with a mobile terminal, and that manages a control content of a controlled device in the predetermined space, the control content management system comprising:
a control content management means for management of predetermined heat source presence or absence information indicating presence or absence of a heat source in the predetermined space, in association with a predetermined control content for the controlled device in the predetermined space;
an adjustment degree management means for management of predetermined adjustment target identification information for identification of one or plural controlled devices, for which control contents are adjusted altogether, in association with a past adjustment degree, at which a control content for the controlled device or devices indicated by the predetermined adjustment target identification information has been adjusted;
an adjustment target management means for management of the predetermined adjustment target identification information, in association with control target identification information for identification of each controlled device indicated by the predetermined adjustment target identification information;
a receiving means that receives, from the detection device, specific control target identification information for identification of a specific controlled device communicatable with the detection device, and specific heat source presence or absence information indicating presence or absence of a heat source in a specific space where the specific controlled device is present; and
a transmitting means that transmits control data to the specific controlled device, the control data indicating a control content that has been adjusted, the control content resulting from adjustment of a specific control content at an adjustment degree, the specific control content corresponding to the received specific heat source presence or absence information in the control content management means, the adjustment degree corresponding to the specific adjustment target identification information in the adjustment degree management means, the specific adjustment target identification information corresponding to the received specific control target identification information in the adjustment target management means.

2. The control content management system according to claim 1, comprising:
a generating means that generates the control data indicating the control content that has been adjusted, the control content resulting from the adjustment of the specific control content at the adjustment degree, the specific control content corresponding to the received specific heat source presence or absence information in the control content management means, the adjustment degree corresponding to the specific adjustment target identification information in the adjustment degree management means, the specific adjustment target identification information corresponding to the received specific control target identification information in the adjustment target management means.

3. The control content management system according to claim 1, wherein the controlled device is lighting equipment, and the adjustment degree indicates a degree of lighting control for the lighting equipment.

4. The control content management system according to claim 3, wherein the lighting equipment is an LED lighting device.

5. The control content management system according to claim 1, wherein the controlled device is air conditioning equipment, and the adjustment degree indicates a change in temperature set for the air conditioning equipment.

6. A power control system, comprising:
the control content management system according to claim 1; and
the detection device.

7. A control content management method executed by a control content management system that is able to communicate with a detection device, which detects temperature of a predetermined space, and with a mobile terminal, and that manages a control content of a controlled device in the predetermined space, wherein
the control content management system has:
a control content management means for management of predetermined heat source presence or absence information indicating presence or absence of a heat source in the predetermined space, in association with a predetermined control content for the controlled device in the predetermined space;
an adjustment degree management means for management of predetermined adjustment target identification information for identification of one or plural controlled devices, for which control contents are adjusted altogether, in association with a past adjustment degree, at which a control content for the controlled device or devices indicated by the predetermined adjustment target identification information has been adjusted; and
an adjustment target management means for management of the predetermined adjustment target identification information, in association with control target identification information for identification of each controlled device indicated by the predetermined adjustment target identification information, and
the control content management system executes:
a receiving step of receiving, from the detection device, specific control target identification information for identification of a specific controlled device communicatable with the detection device, and specific heat source presence or absence information indicating presence or absence of a heat source in a specific space where the specific controlled device is present; and
a transmitting step of transmitting control data to the specific controlled device, the control data indicating a control content that has been adjusted, the control content resulting from adjustment of a specific control content at an adjustment degree, the specific control content corresponding to the received specific heat source presence or absence information in the control content management means, the adjustment degree corresponding to the specific adjustment target identification information in the adjustment degree management means, the specific adjustment target identification information corresponding to the received specific control target identification information in the adjustment target management means.

8. A program that causes a computer to execute the method according to claim 7.
